# EUROPÄISCHE PATENTSCHRIFT

(11) **EP 2 147 519 B1**
(45) Veröffentlichungstag und Bekanntmachung des Hinweises auf die Patenterteilung: **10.06.2015**
(21) Anmeldenummer: 08736508.6
(22) Anmeldetag: 23.04.2008
(51) Int. Cl.: H04L 9/32

(54) **VERFAHREN UND VORRICHTUNG ZUR SICHEREN ÜBERMITTLUNG VON INFORMATIONEN VON VERSCHIEDENEN ABSENDERN**
METHOD AND APPARATUS FOR THE SECURE TRANSMISSION OF DATA FROM DIFFERENT SENDERS
PROCÉDÉ ET DISPOSITIF PERMETTANT DE TRANSMETTRE EN TOUTE SÉCURITÉ DES INFORMATIONS ISSUES DE DIFFÉRENTS EXPÉDITEURS

(30) Priorität: 07.05.2007 DE 102007021808
(43) Veröffentlichungstag der Anmeldung: 27.01.2010
(73) Patentinhaber: Novosec Ag, 60311 Frankfurt Am Main (DE)
(72) Erfinder: STOHN, Maik, 65830 Kriftel (DE); RITTER, Harald, 63791 Karlstein (DE); WEISS, Jürgen, 73431 Aalen (DE)
(74) Vertreter: 2K Patentanwälte Blasberg Kewitz & Reichel
(86) Internationale Anmeldenummer: PCT/EP2008/054937
(87) Internationale Veröffentlichungsnummer: WO 2008/135389

(56) Entgegenhaltungen:
- US-A- 6 137 884
- US-A1- 2004 073 790

## Beschreibung

Die Erfindung betrifft ein Verfahren zur sicheren Übermittlung von Informationen (Nachrichten) von verschiedenen Absendern über einen oder mehrere Mittler auf ein beim Empfänger der Nachricht vorhandenes Gerät (im folgenden auch als "Device" bezeichnet) mit einer an das Gerät angeschlossenen bzw. als Bestandteil des Geräts vorhandenen Ausgabeeinheit (Display, Lautsprecher, Drucker, etc.) und einer an das Gerät angeschlossenen bzw. als Bestandteil des Geräts vorhandenen Eingabeeinheit (Tastatur, Touchpad, etc.) sowie die sichere Rückübermittlung einer Antwortnachricht.

### Gebiet der Erfindung

Eine Nachrichtenübermittlung wird als sicher bezeichnet, wenn die Vertraulichkeit der Nachricht (d.h. ein Unberechtigter kann die Nachricht nicht lesen), die Authentizität der Kommunikationspartner (d.h. die Kommunikationspartner sind tatsächlich diejenigen, die sie zu sein vorgeben) und die Integrität der Nachricht (d.h. die Nachricht wurde nicht verändert) gewährleistet sind.

Bekannte Verfahren zur vertraulichen Übermittlung von Nachrichten verschiedener Absender zu verschiedenen Empfängern werden üblicherweise mit Hilfe von so genannten symmetrischen verschlüsselungsverfahren oder mit Hilfe von so genannten Public-Key-Verfahren realisiert.
Bei den symmetrischen Verschlüsselungsverfahren tauscht jeder Absender mit jedem Empfänger, an den er Nachrichten senden möchte, einen individuellen Schlüssel aus. Mittels dieses Schlüssels können Nachrichten durch ein mathematisches Verfahren sowohl verschlüsselte als auch wieder entschlüsselt werden.
Bei den Public-Key-Verfahren wird jedem Empfänger einer Nachricht ein Schlüsselpaar zugeordnet, das einen geheimen, nur dem Empfänger bekannten Schlüssel, und einen öffentlichen, dem jeweiligen Absender bekannten Schlüssel umfasst. Mittels des öffentlichen Schlüssels wird durch ein mathematisches Verfahren die Nachricht so verschlüsselt, dass ausschließlich der Besitzer des geheimen Schlüssels in der Lage ist, die Nachricht durch ein mathematisches Verfahren wieder zu entschlüsseln. Stellen, über die die verschlüsselte Nachricht gesendet wird, können diese nicht entschlüsseln und sie deshalb auch nicht gezielt modifizieren.

Bekannte Verfahren zur Sicherung der Integrität von Nachrichten verwenden so genannte digitale Signaturen, die oft auch als elektronische Unterschriften bezeichnet werden. Diese digitalen Signaturen sind üblicherweise ebenfalls mit Hilfe von Public-Key-Verfahren realisiert. Dabei wird dem Signierenden ein Schlüsselpaar zugeordnet, das einen geheimen und einen öffentlichen Schlüssel umfasst. Mit Hilfe des geheimen Schlüssels wird in einem mathematischen Verfahren eine Signatur erzeugt, die mit Hilfe des öffentlichen Schlüssels überprüft werden kann. Der geheime Schlüssel steht ausschließlich unter Kontrolle des Signierenden, während der öffentliche Schlüssel beliebig bekannt gegeben werden kann.

Dem Stand der Technik entsprechende Verfahren zur Authentisierung von Kommunikationspartnern werden ebenfalls oft mit Hilfe von so genannten Public-Key-Verfahren realisiert. Zur Authentisierung des Absenders wird entweder die Nachricht von diesem digital signiert oder der Absender beantwortet eine Frage des Empfängers korrekt (Challenge-Response-Verfahren). Die Authentizität des Empfängers wird in den bekannten Verfahren üblicherweise durch Challenge-Response-Verfahren oder durch Verschlüsselung der Nachricht mit dem öffentlichen Schlüssel des Empfängers gewährleistet.

Die US 6 137 884 zeigt eine Verschlüsselung von Informationen in einem Datenaustausch zwischen zwei Personen, die Daten über ein digitales Postoffice austauschen.

Zur Verteilung der öffentlichen Schlüssel werden entweder so genannte digitale Zertifikate verwendet, oder jeder Empfänger muss vorab jedem Absender seinen öffentlichen Schlüssel übermitteln. Dies muss auf sicherem Wege geschehen, um die Integrität des Schlüssels zu gewährleisten.

Die Ausgabe und Verwaltung der digitalen Zertifikate verursacht hohe Kosten und deren Prüfung erfordert zusätzliche Kommunikations- und Rechenaufwand. Der Austausch von Schlüsseln vor der eigentlichen Kommunikation ist insbesondere bei einer Vielzahl potenzieller Absender bzw. bei Empfangsgeräten mit geringer Speicherkapazität nur schwer handhabbar und daher nur bei einem sehr kleinen Nutzerkreis möglich. Dies gilt sowohl bzgl. der Anzahl potenzieller Absender als auch bzgl. der Anzahl potenzieller Empfänger.

Um die Authentizität des Absenders zu gewährleisten, ist bei den bekannten Verfahren der Austausch weiterer Schlüssel bzw. die Verwaltung zusätzlicher Zertifikate erforderlich.

Bei bekannten Verfahren zur Vermeidung von unerwünschten Nachrichten werden serverseitig Absenderangaben geprüft bzw. Nachrichteninhalte nach Schlüsselwörtern gefiltert. Dadurch werden jedoch weder die Vertraulichkeit der Nachricht noch der Datenschutz gewährleistet.

Überblick über die Erfindung:
Aufgabe der vorliegenden Erfindung ist es, die Schwächen der bisher bekannten Verfahren zu lösen, in dem sämtliche Nachrichten über einen oder mehrere Mittler an den jeweiligen Empfänger geschickt werden.
Gelöst wird diese Aufgabe durch eine Vorrichtung und ein Verfahren mit den Merkmalen der unabhängigen Ansprüche.

Der Mittler kann die Authentizität des Absenders überprüfen, aber die vom Absender für den jeweiligen Empfänger verschlüsselte Nachricht nicht lesen. Der Empfänger muss lediglich die Authentizität des Mittlers überprüfen und benötigt hierzu lediglich einen weiteren Schlüssel. Dadurch benötigt der Empfänger unabhängig von der Anzahl der Kommunikationspartner nur eine feste Anzahl von Schlüsseln. Auf Zertifikate kann in der vorliegenden Erfindung ohne jegliche Einschränkung der Sicherheit ebenfalls verzichtet werden. Die vorliegende Erfindung verwendet in der Fachwelt bekannte kryptografische Verfahren zur Verschlüsselung, Authentisierung und zur Erzeugung von digitalen Signaturen und Zeitstempeln.

Im Zusammenhang mit der vorliegenden Erfindung wird unter einer Nachricht jede Art von Information verstanden, die in elektronischer Form wiedergeben werden kann, beispielsweise Zahlen, Buchstaben, Zahlenkombinationen, Buchstabenkombinationen, Grafiken, Tabellen, etc.

Unter einer Authentisierungsfunktion A und der zugehörigen Oberprüfungsfunktion Ü wird im Zusammenhang mit der vorliegenden Erfindung jede Art von Verfahren verstanden, mit dem die Authentizität einer Nachricht oder eines Kommunikationspartners - mittels der Authentisierungsfunktion A - nachgewiesen bzw. die Korrektheit der Authentisierung - mittels der Überprüfungsfunktion Ü - überprüft werden kann.

Unter einer Verschlüsselungsfunktion V und der zugehörigen Entschlüsselungsfunktion E wird im Zusammenhang mit dieser Erfindung jede Art von Verfahren verstanden, mit dem - durch Verschlüsselung mittels der Verschlüsselungsfunktion V - sichergestellt wird, dass kein Unberechtigter die Nachricht lesen kann, während ein Berechtigter diese - nach Entschlüsselung mittels der Entschlüsselungsfunktion E - lesen kann.

Unter einer Bestätigungsfunktion B und der zugehörigen Prüffunktion P wird im Zusammenhang mit dieser Erfindung jede Art von Verfahren verstanden, mit dem eine Eigenschaft einer Nachricht - mittels der Bestätigungsfunktion B - bestätigt bzw. die Echtheit dieser Bestätigung - mittels der Prüffunktion P - geprüft werden kann.

Unter einer Zeitstempelfunktion Z wird im Zusammenhang mit dieser Erfindung jede Art von Verfahren verstanden, mit dem der Zeitpunkt bestätigt wird, zu dem eine Nachricht vorlag. Unter einer zugehörigen Zeitstempal-Verifizierungsfunktion T wird im Zusammenhang mit dieser Erfindung jede Art von Verfahren verstanden, mit dem der Mittels der Funktion Z erstellte Zeitstempel geprüft werden kann.

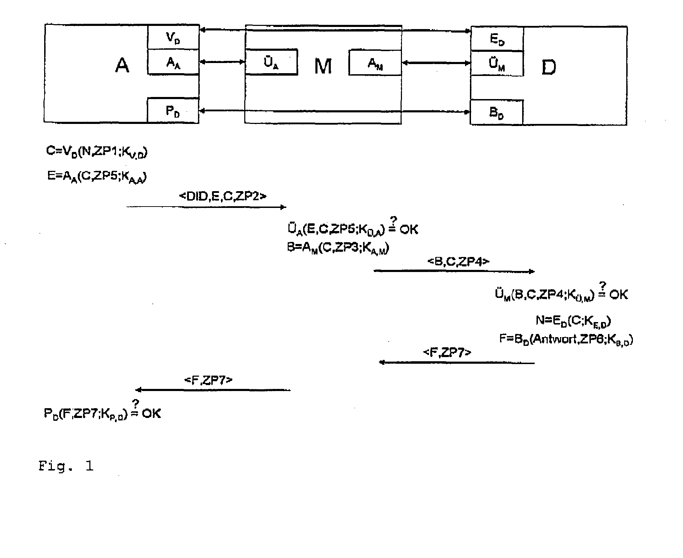

Im Folgenden wird das grundlegende Verfahren zur sicheren Nachrichtenübertragung näher beschrieben, wobei sich auf Fig. 1 der Ablaufbeschreibung 1 bezogen wird.

Um eine Nachricht N sicher an ein Device D zu senden, verschlüsselt der Absender A die Nachricht mit Hilfe der Verschlüsselungsfunktion V_{D}, authentisiert sich gegenüber dem Mittler mit Hilfe der Authentisierungsfunktion A_{A} und sendet die verschlüsselte Nachricht an den Mittler. Der Mittler kann die Nachricht mit Hilfe der Authentisierungsfunktion A_{M} authentisieren und an das vom Absender benannte Device D weiterleiten, kann aber die Nachricht selbst nicht entschlüsseln. Die Authentisierung der Nachricht und deren Weiterleitung an das Device durch den Mittler erfolgt dabei nur, wenn die Überprüfung der Authentisierung mittels der Überprüfungsfunktion Ü_{A} erfolgreich war. Das Device D überprüft die Authentisierung des Mittlers mit Hilfe der Uberprüfungsfunktion Ü_{M}, entschlüsselt bei erfolgreicher Überprüfung die Nachricht und gibt sie über das angeschlossene Ausgabemedium (Display, Drucker, Lautsprecher, etc.) aus. Das Device D generiert (ggf. nach Freigabe durch den Benutzer) eine Antwort, die mit Hilfe einer Bestätigungsfunktion B_{D} legitimiert und direkt oder über den Mittler an den Absender zurückgeschickt wird. Der Absender A kann die Herkunft und Integrität der Antwort mit Hilfe der Prüffunktion P_{D} prüfen (Siehe Ablaufbeschreibung 1 und Ablaufplan in Fig. 1).

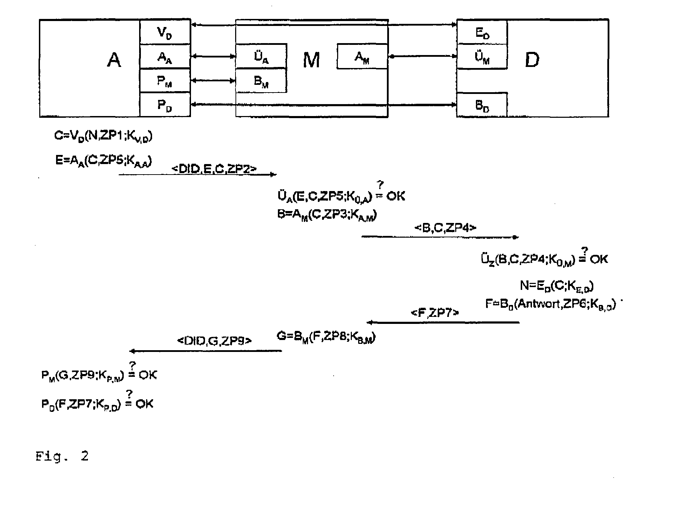

In einer weiteren vorteilhaften Ausprägung des Verfahrens, welche im Ablaufplan 2 und der dazugehörigen Fig. 2 dargestellt ist, kann das Device D gegebenenfalls nach Freigabe des Benutzers eine Antwort mit Hilfe einer Bestätigungsfunktion B_{D} legitimieren und dem Mittler zurückschicken. Dieser kann den Eingang einer Antwort vom Device D mit Hilfe einer Bestätigungsfunktion B_{M} bestätigen und die vom Device D erhaltene Antwort zusammen mit der Bestätigung an den Absender A der ursprünglichen Nachricht N weiterleiten. Der Absender A kann die Korrektheit der Bestätigungen mit Hilfe der Prüffunktionen P_{M} bzw. P_{D} prüfen (Siehe Ablaufbeschreibung 2).

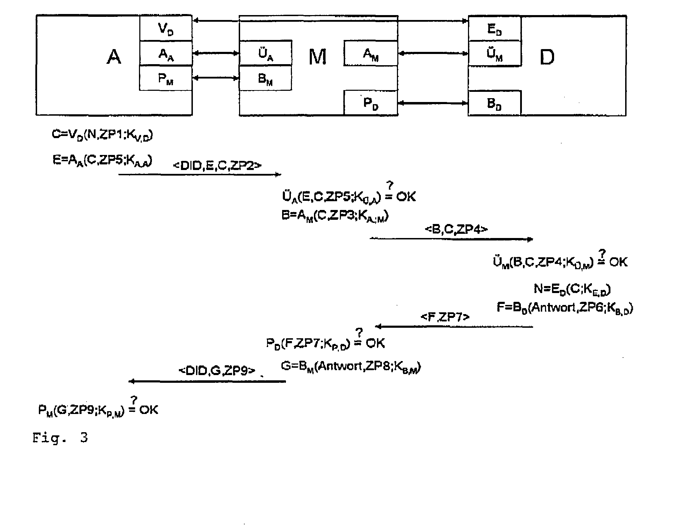

Eine weitere vorteilhafte Ausprägung des Verfahrens ist in Ablaufplan 3 mit Fig. 3 dargestellt. Dabei kann das Device D gegebenenfalls nach Freigabe des Benutzers eine Antwort mit Hilfe einer Bestätigungsfunktion B_{D} legitimieren und an den Mittler zurückschicken. Dieser kann die Herkunft und Integrität der Antwort mit Hilfe der Prüffunktion P_{D} prüfen, die erfolgte Prüfung mit Hilfe einer Bestätigungsfunktion B_{M} bestätigen und an den Absender A der ursprünglichen Nachricht N weiterleiten. Der Absender A kann die Korrektheit der Bestätigung mit Hilfe einer Prüffunktion P_{M} prüfen. In dieser Ausprägung muss der Absender A lediglich die Bestätigung durch den Mittler prüfen und kann damit bereits sicher sein, dass die Antwort vom Device D stammt. Der Absender A benötigt keinen weiteren Schlüssel des Device D zur Prüfung der Bestätigung durch das Device D.

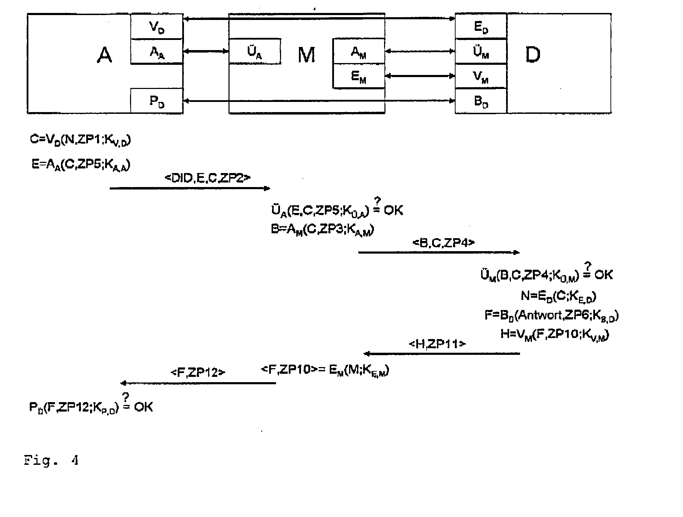

Ablaufbeschreibung 4 mit Fig. 4 illustriert eine weitere vorteilhafte Ausprägung des Verfahrens analog zur Ablaufbeschreibung 1 mit dem Unterschied, dass das Device D die Antwort mit Hilfe einer Verschlüsselungsfunktion V_{M} verschlüsselt, so dass nur der Mittler die Antwort mit Hilfe der zugehörigen Entschlüsselungsfunktion E_{M} wieder entschlüsseln kann.

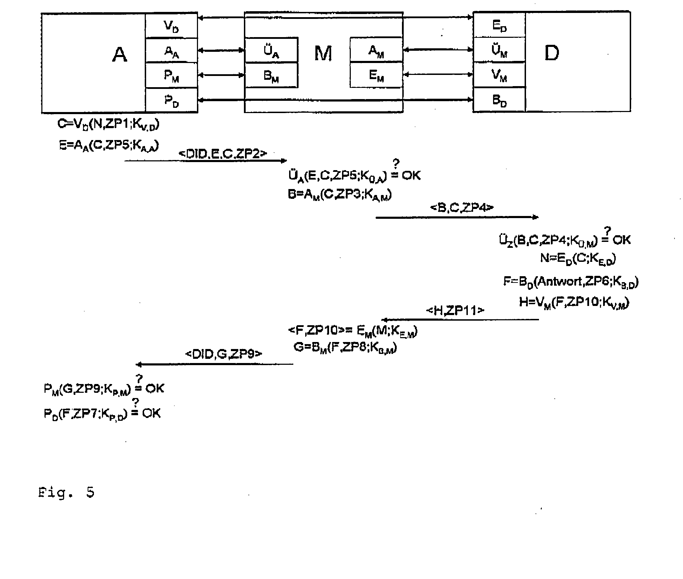

Ablaufbeschreibung 5 mit Fig. 5 illustriert eine weitere vorteilhafte Ausprägung des Verfahrens analog zur Ablaufbeschreibung 2 mit dem Unterschied, dass das Device D die Antwort mit Hilfe einer Verschlüsselungsfunktion V_{M} verschlüsselt, so dass nur der Mittler die Antwort mit Hilfe der zugehörigen Entschlüsselungsfunktion E_{M} wieder entschlüsseln kann.

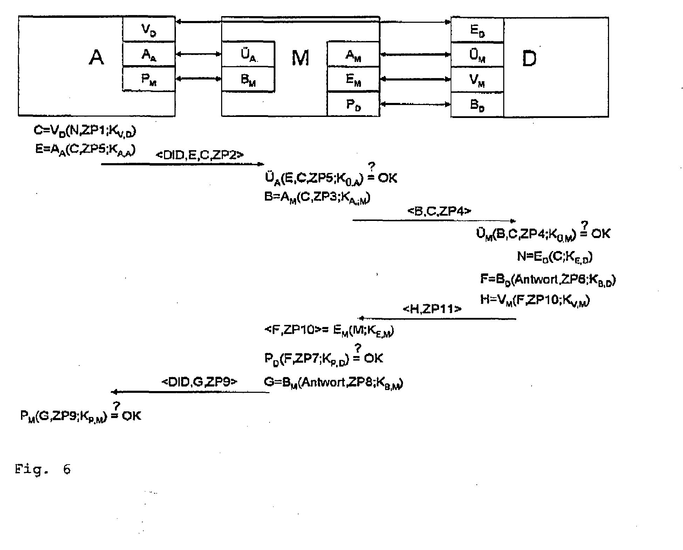

Ablaufbeschreibung 6 mit Fig. 6 illustriert eine weitere vorteilhafte Ausprägung des Verfahrens analog zur Ablaufbeschreibung 3 mit dem Unterschied, dass das Device D die Antwort mit Hilfe einer Verschlüsselungsfunktion V_{M} verschlüsselt, so dass nur der Mittler die Antwort mit Hilfe der zugehörigen Entschlüsselungsfunktion E_{M} wieder entschlüsseln kann.

In einer weiteren vorteilhaften Ausprägung des Verfahrens, gemäß Ablaufbeschreibung 7, werden die an das Device gesendeten verschlüsselte Nachrichten mit einer vom Absender A und dem Device D abhängigen Nachrichten-ID versehen, die verhindert, dass eine Nachricht N mehrmals vom Device D akzeptiert wird. Dies ist eine Gegenmaßnahme gegen sogenannte Wiedereinspielungsangriffe.

In einer weiteren vorteilhaften Ausprägung des Verfahrens gemäß Ablaufbeschreibung 8 werden die an das Device gesendeten verschlüsselten Nachrichten mit einer nur vom Device D abhängigen Nachrichten-ID versehen, die verhindert, dass eine Nachricht mehrmals vom Device D akzeptiert wird. In dieser Ausprägung ist die Nachrichten-ID vom Mittler zu verwalten.

In einer weiteren vorteilhaften Ausprägung des Verfahrens gemäß Ablaufbeschreibung 9 können die Schlüssel des Mittlers individuell pro Device D bzw. pro Absender A gewählt werden. Dies hat zur Folge, dass verschiedene Angriffe erschwert werden, die auf der zu häufigen Verwendung von kryptografischen Schlüsseln beruhen. Darüber hinaus wird die Vertraulichkeit nochmals verbessert.

In einer weiteren vorteilhaften Ausprägung des Verfahrens gemäß Ablaufbeschreibung 10 kann der Mittler zusätzlich einen Zeitstempeldienst zur Verfügung stellen, wodurch der Zeitpunkt der Nachrichtenübermittlung nachweisbar dokumentiert wird. Darüber hinaus wird dadurch das Vorhandensein von zwei vollständig identischen Nachrichten ausgeschlossen.

In einer weiteren vorteilhaften Ausprägung des Verfahrens kann auf einen externen Zeitstempeldienst zur Markierung der Nachricht mit der aktuellen Zeit zurückgegriffen werden.

In einer weiteren vorteilhaften Ausprägung des Verfahrens können die vom Mittler verwendeten kryptografischen Algorithmen individuell pro Absender A bzw. individuell pro Device D variiert werden.

In einer weiteren vorteilhaften Ausprägung des Verfahrens können die vom Absender A zu verwendenden kryptografischen Algorithmen individuell pro Device D variiert werden.

In einer weiteren vorteilhaften Ausprägung des Verfahrens erhält der Mittler aus der Antwort keinerlei Informationen über die in der Antwort enthaltene Information. Dies kann z.B. dadurch erreicht werden, dass Absender A zusammen mit der Nachricht mögliche Antworten und zugehörige (Zufalls-)werte verschlüsselt; das Device D sendet dann anstelle der Antwort den zugehörigen (Zufalls-)wert.

In einer weiteren vorteilhaften Ausprägung des Verfahrens kann der Mittler die Antwort des Device D interpretieren, ohne Rückschlüsse auf die eigentliche, vom Absender A versandte Nachricht N ziehen zu können. Dabei ist der Ablauf analog zu einer der Ablaufbeschreibungen 1 bis 10 mit dem Unterschied, dass der Mittler die Antwort interpretieren kann und damit z.B. statistische Auswertungen pro Absender oder Bewertungen von Devices erstellt.

In einer weiteren vorteilhaften Ausprägung des Verfahrens können die verwendeten kryptographischen Algorithmen und/oder kryptogaphischen Schlüssel bei Bedarf - unter Verwendung der erfindungsgemäßen sicheren Nachrichtenübermittlung ausgewechselt werden.

In einer weiteren vorteilhaften Ausprägung des Verfahrens muss sich der Absender A der Nachricht N gegenüber dem Mittler nicht authentisieren. Der Mittler leitet die vom Absender A verschlüsselte Nachricht nur dann an das Device D weiter, wenn der Benutzer des Device nicht authentisierte Nachrichten explizit zugelassen hat.

In einer weiteren vorteilhaften Ausprägung des Verfahrens wird die Antwort nicht an den Absender der ursprünglichen Nachricht, sondern an einen Dritten gesendet.

In einer weiteren vorteilhaften Ausprägung des Verfahrens wird keine Antwort gesendet.

In einer weiteren vorteilhaften Ausprägung des Verfahrens kann der Mittler gleichzeitig die Rolle des Absenders übernehmen.

In einer weiteren vorteilhaften Ausprägung des Verfahrens können die beim Absender benötigten Schlüssel des Device D beim Mittler gespeichert und jeweils dort vom Absender angefordert werden.

Es ist bevorzugt, dass das Device D ein kleines Handgerät ist, das drahtgebunden, drahtlos über ein Funknetz oder eine optische Verbindung arbeitet und lediglich eine sehr begrenzte Funktionalität aufweist. Diese umfasst die Zusage, die Ablehnung und die Anzeige von Informationen auf einem Display. Auf dem Display können z.B. die Transaktionsdetails, wie Summe, Kontonummer und Empfänger dargestellt werden, so dass der Benutzer dann die Transaktion auch tatsächlich bestätigen kann, ohne dass ein Man-in-the-Middle-Angriff gefahren worden sein kann.

Das Betriebssystem ist gehärtet und lässt das Ausführen fremden Codes nicht zu. Updates der Software sind nicht möglich oder nur mit sehr hohen Sicherheitsanforderungen.

Eine bevorzugte Anwendung ist der Einsatz zur sicheren Autorisierung von Transaktionen.

### Figurenbeschreibung:

Im Folgenden erfolgt eine kurze Figurenbeschreibung, die dem einfacheren Verständnis der Erfindung dient.
Fig. 1 zeigt eine 1. Ablaufbeschreibung;
Fig. 2 zeigt eine 2. Ablaufbeschreibung;
Fig. 3 zeigt eine 3. Ablaufbeschreibung;
Fig. 4 zeigt eine 4. Ablaufbeschreibung;
Fig. 5 zeigt eine 5. Ablaufbeschreibung;
Fig. 6 zeigt eine 6. Ablaufbeschreibung;

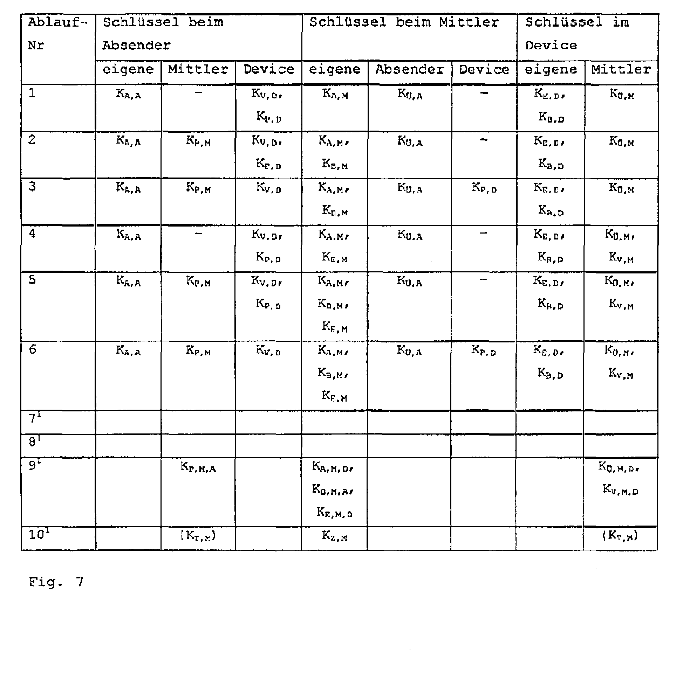

Fig. 7 zeigt die Schlüsselverwaltung bei den einzelnen Entitäten;

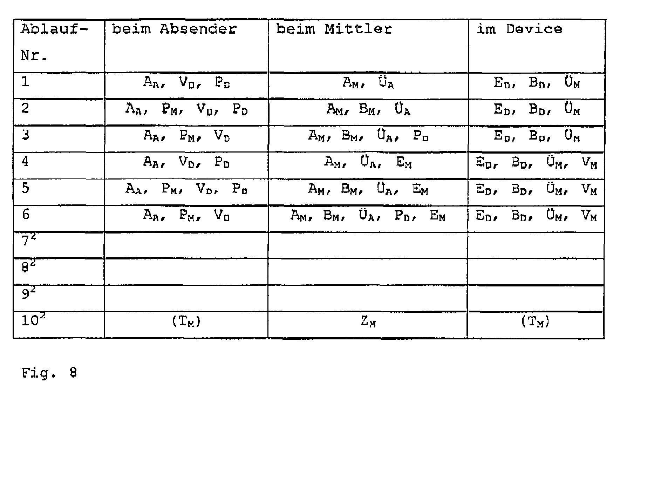

Fig. 8 zeigt die bei den einzelnen Entitäten implementieren Algorithmen;

### Ausführungsbeispiele:

Im Folgenden wird detailliert auf die Ausführungsbeispiele eingegangen, die bereits oben erwähnt wurden.

Grundsätzlich wird für jeden Absender im System eine eindeutige Absender-ID (AID) vergeben, die dem Mittler bekannt ist. Jedem Device ist eine eindeutige Device ID (DID) zugeordnet, die dem Mittler bekannt ist.

### Nomenklaturen:

K_{X,Y} ist Schlüssel für Funktion X (=V,E,A,P,B,Ü,Z,T) und ist der Entität Y (=A,M,D) zugeordnet (d.h. im Fall von asymmetrischen Schlüsselpaaren ist der geheime Schlüssel ausschließlich im Besitz der Entität Y)
K_{X,Y,U} ist Schlüssel für Funktion X (=V,E,A,P,B,Ü,Z,T) und ist der Entität Y (=A,M,D) zugeordnet, wobei der Schlüssel individuell für jede Entität U (=A,D) verschieden ist | | steht für die Verkettung von Zeichenfolgen
<.,.,.,.> steht für eine Liste von Werten
X_{Y}(a,b,C;K_{X,Y}) steht für die der Entität Y zugeordnete Funktion X; die Eingabewerte (im Beispiel a, b und c) stehen in der Klammer vor dem Semikolon, der verwendete Schlüssel (im Beispiel K_{X,Y}) nach dem Semikolon.
ZPn: beliebig viele Zusatzparameter je nach Ausprägung des Verfahrens; n ist fortlaufende Nummer und dient der Unterscheidung, da Zusatzparamater sich von Funktion zu Funktion ändern können.

Ablaufbeschreibung in Fig. 1 stellt den Basisablauf dar.
1. Absender A berechnet C=V_{D}(N,ZP1;K_{V,D}) und E=A_{A}(C,ZP5;K_{A,A}) Absender A sendet <DID,E,C,ZP2> an die Zentrale [ZP2 enthält die für die Überprüfung der Authentisierung erforderlichen Werte von ZP5 und ggf. weitere Informationen]
2. Mittler überprüft die Authentisierung des Absenders A mittels Ü_{A}(E,C,ZP5;K_{U,A}) Mittler berechnet B=A_{M}(C,ZP3;K_{A,M}) und sendet <B,C,ZP4> an das Device
   [ZP4 enthält die für die Überprüfung der Authentisierung erforderlichen Werte von ZP3 und ggf. weitere Informationen]
3. Device D überprüft die Authentisierung des Mittlers mittels Ü_{M}(B,C,ZP4;K_{U,M})
4. Device D entschlüsselt die Nachricht mittels E_{D}(C;K_{E,D})
5. Device D gibt die Nachricht N (und ggf. Informationen zum Absender A) über das angeschlossene Ausgabemedium aus
6. Device D berechnet (ggf. nach Freigabe durch den Benutzer) F=B_{D}(Antwort,ZP6;K_{B,D}) und sendet <F,ZP7> an den Mittler
7. Mittler leitet <F,ZP7> unmittelbar an den Absender A weiter
8. Absender A prüft die Bestätigung mittels P_{D}(F,ZP7;K_{P,D}) und interpretiert die Antwort

Die hierfür benötigten Schlüssel sind für
Device:
   Eigene Schlüssel: K_{E,D}, K_{B,D}
   Schlüssel des Mittlers: K_{U,M}
   Dem Absender bekannt: K_{V,D}, K_{B,D}
Absender:
   Eigene Schlüssel: K_{A,A} (kann auch userID/password sein)
   Schlüssel des Device: K_{V,D}, K_{P,D}
Mittler:
   Eigene Schlüssel: K_{A,M}
   Schlüssel des Absenders: K_{U,M} (kann auch userID/password sein)
   Dem Device bekannt: K_{U,M}

Die Ablaufbeschreibung 2, wie sie auch aus Fig. 2 ersichtlich ist, umfasst den Basisablauf mit zusätzlicher Bestätigung durch den Mittler
1. Absender A berechnet C=V_{D}(N, ZP1;K_{V,D}) und E=A_{A}(C,ZP5;K_{A,A}) Absender A sendet <DID,E,C,ZP2> an die Zentrale [ZP2 enthält die für die Überprüfung der Authentisierung erforderlichen Werte von ZP5 und ggf. weitere Informationen]
2. Mittler. überprüft die Authentisierung des Absenders A mittels Ü_{A}(E,C,ZP5;K_{Ü,A})
   Mittler berechnet B=A_{M}(C,ZP3;K_{A,M}) und sendet <B,C,ZP4> an das Device
   [ZP4 enthält die für die Überprüfung der Authentisierung erforderlichen Werte von ZP3 und ggf. weitere Informationen]
3. Device D überprüft die Authentisierung des Mittlers mittels Ü_{M}(B,C,ZP4;K_{Ü,M})
4. Device D entschlüsselt die Nachricht mittels E_{D}(C;K_{E,D})
5. Device D gibt die Nachricht N (und ggf. Informationen zum Absender A) über das angeschlossene Ausgabemedium aus
6. Device D berechnet (ggf. nach Freigabe durch den Benutzer) F=B_{D}(Antwort,ZP6;K_{B,D}) und sendet <F,ZP7> an den Mittler
7. Mittler bestätigt Eingang der Antwort von Device D mittels G=B_{M}(F,ZP8;K_{B,M}) und sendet <DID,G,ZP9> an den Absender A
8. Absender A prüft die Bestätigung des Mittlers mittels P_{M}(G,ZP9;K_{P,M}). Bei erfolgreicher Prüfung prüft Absender A die Bestätigung durch das Device D mittels P_{D}(F,ZP7;K_{P,D}) und interpretiert die Antwort

Die hierfür benötigten Schlüssel sind für
Device:
   Eigene Schlüssel: K_{E,D}, K_{B,D}
   Schlüssel des Mittlers: K_{Ü,M}
   Dem Absender bekannt: K_{V,D}, K_{P,D}
Absender:
   Eigene Schlüssel: K_{A,A} (kann auch userID/password sein)
   Schlüssel des Mittlers: K_{P,M}
   Schlüssel des Device: K_{V,D}, K_{P,D}
Mittler:
   Eigene Schlüssel: K_{A,M}, K_{B,M}
   Schlüssel des Absenders: K_{U,A} (kann auch userID/password sein)
   Dem Absender bekannt: K_{P,M}
   Dem Device bekannt: K_{U,M}

Die Ablaufbeschreibung 3, wie auch aus Fig. 3 ersichtlich, umfasst die Prüfung der Bestätigung durch den Mittler
1. Absender A berechnet C=V_{D}(N,ZP1;K_{V,D}) und E=A_{A}(C,ZP5;K_{A,A}) Absender A sendet <DID,E,C,ZP2> an die Zentrale [ZP2 enthält die für die Überprüfung der Authentisierung erforderlichen Werte von ZP5 und ggf. weitere Informationen]
2. Mittler überprüft die Authentisierung des Absenders A mittels Ü_{A}(E,C,ZP5;K_{U,A})
   Mittler berechnet B=A_{M}(C,ZP3;K_{A,M}) und sendet <B,C,ZP4> an das Device
   [ZP4 enthält die für die Überprüfung der Authentisierung erforderlichen Werte von ZP3 und ggf. weitere Informationen]
3. Device D überprüft die Authentisierung des Mittlers mittels Ü_{M}(B,C,ZP4;K_{U,M})
4. Device D entschlüsseln die Nachricht mittels E_{D}(C;K_{E,D})
5. Device D gibt die Nachricht N (und ggf. Informationen zum Absender A) über das angeschlossene Ausgabemedium aus
6. Device D berechnet (ggf. nach Freigabe durch den Benutzer) F=B_{D})(Antwort,ZP6;K_{B,D}) und sendet <F,ZP7> an den Mittler
7. Mittler prüft die Bestätigung durch das Device D mittels P_{D}(F,ZP7,K_{P,D}); bei erfolgreicher Prüfung bestätigt der Mittler die Herkunft und Integrität der Antwort von Device D mittels G=B_{M} (Antwort,ZP8;K_{B,M}) und sendet <DID,G,ZP9> an den Absender A
8. Absender A prüft die Bestätigung des Mittlers mittels P_{M}(G,ZP9;K_{P,M}). Bei erfolgreicher Prüfung interpretiert Absender A die Antwort

Die hierbei benötigten Schlüssel sind:
Device:
   Eigene Schlüssels: K_{E,D}, K_{D,D}
   Schlüssel des Mittlers: K_{Ü,M}
   Dem Mittler bekannt: K_{P,D}
   Dem Absender bekannt: K_{V,D}
Absender:
   Eigene Schlüssel: K_{A,A} (kann auch userID/password sein)
   Schlüssel des Mittlers: K_{P,M}
   Schlüssel des Device: K_{V,D}
Mittler:
   Eigene Schlüssel: K_{A,M}, K_{B,M}
   Schlüssel des Device: K_{P,D}
   Schlüssel des Absenders: K_{Ü,A} (kann auch userlD/password sein)
   Dem Absender bekannt: K_{P,M}
   Dem Device bekannt: K_{Ü,M}

Ablaufbeschreibung 4 Ablauf analog zu Ablauf 1, jedoch mit einer Verschlüsselung der Antwort für den Mittler.
1. Absender A berechnet C=V_{D}(N,ZP1;K_{V,D}) und E=A_{A}(C,ZP5;K_{A,A}) Absender A sendet <DID,E,C,ZP2> an die Zentrale [ZP2 enthält die für die Überprüfung der Authentisierung erforderlichen Werte von ZP5 und ggf. weitere Informationen]
2. Mittler überprüft die Authentisierung des Absenders A mittels Ü_{A}(E,C,ZP5;K_{Ü,A})
   Mittlers berechnet B=A_{M}(C,ZP3;K_{A,M}) und sendet <B,C,ZP4> an das Device
   [ZP4 enthält die für die Überprüfung der Authentisierung erforderlichen Werte von ZP3 und ggf. weitere Informationen]
3. Device D überprüft die Authentisierung des Mittlers mittels Ü_{M}(B,C,ZP4;K_{Ü,M})
4. Device D entschlüsselt die Nachricht mittels E_{D}(C;K_{E,D})
5. Device D gibt die Nachricht N (und ggf. Informationen zum Absender A) über das angeschlossene Ausgabemedium aus
6. Device D berechnet (ggf. nach Freigabe durch den Benutzer) F=B_{D}(Antwort,ZP6;K_{B,D}) sowie H=V_{M}(F,ZP10;K_{V,M}) und sendet <H,ZP11> an den Mittler
7. Mittler berechnet <F,ZP10>= E_{M}(M;K_{E,M}) und sendet <F,ZP12> an den Absender A
8. Absender A prüft die Bestätigung mittels P_{D}(F,ZP12;K_{P,D}) und interpretiert die Antwort

Die hierfür benötigten Schlüssel sind:
Device:
   Eigene Schlüssel: K_{E,D}, K_{B,D}
   Schlüssel des Mittlers: K_{Ü,M}, K_{V,M}
   Dem Absender bekannt: K_{V,D}, K_{P,D}
Absender:
   Eigene Schlüssel: K_{A,A} (kann auch userID/password sein)
   Schlüssel des Device: K_{V,D}, K_{P,D}
Mittler:
   Eigene Schlüssel: K_{A,M}, K_{E,M}
   Schlüssel des Absenders: K_{Ü,A} (kann auch userID/password sein)
   Dem Device bekannt: K_{Ü,M}, K_{V,M}

Die Ablaufbeschreibung 5, gemäß Fig. 5, ist analog zu Ablauf 2, jedoch mit einer Verschlüsselung der Antwort für den Mittler.
1. Absender A berechnet C=V_{D}(N,ZP1;K_{V,D}) und E=A_{A}(C,ZP5;K_{A,A}) Absender A sendet <DID,E,C,ZP2> an die Zentrale [ZP2 enthält die für die Überprüfung der Authentisierung erforderlichen Werte von ZP5 und ggf. weitere Informationen]
2. Mittler überprüft die Authentisierung des Absenders A mittels Ü_{A}(D,C,ZP5;K_{Ü,A})
   Mittler berechnet B=A_{M}(C,ZP3;K_{A,M}) und sendet <B,C,ZP4> an das Device
   [ZP4 enthält die für die Überprüfung der Authentisierung erforderlichen Werte von ZP3 und ggf. weitere Informationen]
3. Device D überprüft die Authentisierung des Mittlers mittels Ü_{M}(B,C,ZP4;K_{Ü,M})
4. Device D entschlüsselt die Nachricht mittels E_{D}(C;K_{E,D})
5. Device D gibt die Nachricht N (und ggf. Informationen zum Absender A) über das angeschlossene Ausgabemedium aus
6. Device D berechnet (ggf. nach Freigabe durch den Benutzer) F=B_{D}(Antwort,ZP6;K_{B,D}) sowie H=V_{M}(F,ZP10;K_{V,M}) und sendet <H,ZP11> an den Mittler
7. Mittler berechnet <F,ZP10>= E_{M}(M;K_{E,M}), bestätigt Eingang der Antwort von Device D mittels G=B_{M}(F,ZP8;K_{B,M}) und sendet <DID,G,ZP9> an den Absender A
8. Absender A prüft die Bestätigung des Mittlers mittels P_{M}(G,ZP9;K_{P,M}). Bei erfolgreicher Prüfung prüft Absender A die Bestätigung durch das Device D mittels P_{D}(F,ZP7;K_{P,D}) und interpretiert die Antwort

Benötigte Schlüssel:
Device:
   Eigene Schlüssel: K_{E,D}, K_{B,D}
   Schlüssel das Mittlers: K_{U,M}, K_{V,M}
   Dem Absender bekannt: K_{V,D}, K_{P,D}
Absender:
   Eigene Schlüssel: K_{A,A} (kann auch userID/password sein)
   Schlüssel des Mittlers: K_{P,M}
   Schlüssel des Device: K_{V,D} K_{P,D}
Mittler:
   Eigene Schlüssel: K_{A,M}, K_{B,M}, K_{E,M}
   Schlüssel des Absenders: K_{Ü,A} (kann auch userID/password sein)
   Dem Absender bekannt: K_{P,M}
   Dem Device bekannt: K_{Ü,M}, K_{V,M}

Ablaufbeschreibung 6, gemäß Fig. 6 ist, ist analog zu Ablauf 3, Verschlüsselung der Antwort für den Mittler
1. Absender A berechnet C=V_{D}(N,ZPI;K_{V,D}) und E=A_{A}(C,ZP5;K_{A,A}) Absender A sendet <DID,E,C,ZP2> an die Zentrale [ZP2 enthält die für die Überprüfung der Authentisierung erforderlichen Werte von ZP5 und ggf. weitere Informationen]
2. Mittler überprüft die Authentisierung des Absenders A mittels Ü_{A}(E,C,ZP5;K_{Ü,A})
   Mittler berechnet B=A_{M}(C,ZP3;K_{A,M}) und sendet <B,C,ZP4> an das Device
   [ZP4 enthält die für die Überprüfung der Authentisierung erforderlichen Werte von ZP3 und ggf. weitere Informationen]
3. Device D überprüft die Authentisierung des Mittlers mittels Ü_{M}(B,C,ZP4;K_{Ü,M})
4. Device D entschlüsselt die Nachricht mittels E_{D}(C;K_{E,D})
5. Device D gibt die Nachricht N (und ggf. Informationen zum Absender A) über das angeschlossene Ausgabemedium aus
6. Device D berechnet (ggf. nach Freigabe durch den Benutzer) F=B_{D}(Antwort,ZP6;K_{B,D}) sowie H=V_{M}(F,ZP10;K_{V,M}) und sendet <H,ZP11> an den Mittler
7. Mittler berechnet <F,ZP10>= E_{M}(M;K_{E,M}), prüft die Bestätigung durch das Device D mittels P_{D}(F,ZP7;K_{P,D}); bei erfolgreicher Prüfung bestätigt der Mittler die Herkunft und Integrität der Antwort von Device D mittels G=B_{M}(Antwort,ZP8;K_{P,M}) und sendet <DTD,G,ZP9> an den Absender A
8. Absender A prüft die Bestätigung des Mittlers mittels P_{M}(G,ZP9;K_{P,M}). Bei erfolgreicher Prüfung interpretiert Absender A die Antwort

Benötigte Schlüssel:
Device:
   Eigene Schlüssel: K_{E,D}, K_{B,D}
   Schlüssel des Mittlers: K_{Ü,M}, K_{V,M}
   Dem Mittler bekannt: K_{P,D}
   Dem Absender bekannt: K_{V,D}
Absender:
   Eigene Schlüssel: K_{A,A} (kann auch userID/password sein)
   Schlüssel des Mittlers: K_{P,M}
   Schlüssel des Device: K_{V,D}
Mittler:
   Eigene Schlüssel: K_{A,M}, K_{B.M}, K_{E,M}
   Schlüssel des Device: K_{P,D}
   Schlüssel des Absenders: K_{Ü,A} (kann auch userID/password sein)
   Dem Absender bekannt: K_{P,M}
   Dem Device bekannt: K_{Ü,M}, K_{V,M}

Bei der Ablaufbeschreibung 7, wird zusätzlich eine vom Absender vergebene Nachrichten-ID verwendet.

Der Ablauf ist identisch mit einem der bisher beschriebenen Abläufe 1-6. Absender A übermittelt zusätzlich eine vom Device und vom Absender abhängige Nachrichten-ID NID_{A}, die er als (Teil von) ZP1 zusammen mit der eigentlichen Nachricht N verschlüsselt. Das Device entschlüsselt die Nachricht N und gibt diese nur dann über das angeschlossene Ausgabemedium aus, wenn die übermittelte NID_{A} gültig (z.B. größer als die zuletzt von Absender A übermittelte NID_{A}, aber maximal um 3 größer) ist. In dieser Ausprägung muss das Device pro Absender A die zuletzt erhaltene NID_{A} speichern.

### Benötigte Schlüssel:

### Analog zum zu Grunde liegenden Ablauf

Ablaufbeschreibung 8 verwendet eine zentral verwaltete Nachrichten-ID.

Der Ablauf ist identisch mit einem der bisher beschriebenen Abläufe 1 bis 6. Der Mittler verwaltet pro Device eine Nachrichten-ID, die er (nach Authentisierung des Absenders A) vor Schritt 1 auf Anforderung an den Absender A übermittelt. Hierfür ist eine verschlüsselte Übertragung vorteilhaft, um das Abfangen der aktuell gültigen NID durch einen unbefugten Dritten zu verhindern. Absender A verschlüsselt die NID als (Teil von) ZP1 zusammen mit der eigentlichen Nachricht N. Das Device entschlüsselt die Nachricht N und gibt diese nur dann über das angeschlossene Ausgabemedium aus, wenn die übermittelte NID gültig (z.B. größer als die zuletzt von Absender A übermittelte NID, aber maximal um 3 größer) ist. In dieser Ausprägung muss das Device lediglich die NID der zuletzt ausgegebenen Nachricht speichern.

### Benötigte Schlüssel:

### Analog zum zu Grunde liegenden Ablauf

Bei der Ablaufbeschreibung 9 erfolgt die Verwendung von Device- bzw. Absender-spezifischen Schlüsseln des Mittlers

Der Ablauf ist identisch zu einem der bisher beschriebenen Abläufe 1 bis 8. Allerdings wird je nach Absender bzw. je nach Device ein anderer Schlüssel des Mittlers verwendet. In einer Variante des Verfahrens kann der Mittler die NID (ebenfalls) als (Teil von) ZP3 an das Device übertragen. Voraussetzung hierfür ist die Verwendung von pro Device D unterschiedlichen Schlüsselpaaren (K_{A,M,D},K_{Ü,M,D}) und Verwendung eines Verschlüsselungsverfahrens zur Authentisierung des Mittlers (d.h. mit A_{M}(C,ZP3;K_{A,M,D}) kann ZP3 ohne Kenntnis von K_{Ü,M,D} nicht bestimmt werden).

### Benötigte Schlüssel:

Analog zum zu Grunde liegenden Ablauf, jedoch Devicespezifische Schlüssel K_{A,M,D}, K_{Ü,M,D}, K_{V,M,D}, K_{E,M,D} anstelle der Device-unabhängigen Schlüssel K_{A,M}, K_{Ü,M}, K_{V,M}, K_{E,M} und Absenderspezifische Schlüssel K_{B,M,A}, K_{P,M,A} anstelle der Absenderunabhängigen Schlüssel K_{B,M,}, K_{P,M}.

Bei der Ablaufbeschreibung 10 wird zusätzlich noch ein Zeitstempeldienst eingesetzt.

Der Ablauf ist identisch zu einem der bisher beschriebenen Abläufe 1 bis 9, jedoch kann der Mittler für eine beliebige von ihm erhaltene oder zu sendende Information I den Empfangs- bzw. Absendezeitpunkt mit der Funktion J=Z_{M}(I,ZP11;K_{Z,M}) für Dritte nachprüfbar bestätigen. Jeder, der Zugriff auf den zugehörigen Schlüssel K_{T,M} besitzt, kann mit Hilfe der Funktion Tₘ(I,J,ZP11,K_{T,M}) die Echtheit des Zeitstempels prüfen.

### Benötigte Schlüssel:

Analog zum zu Grunde liegenden Ablauf, jedoch zusätzlich Schlüssel K_{T,M} des Mittlers beim Prüfen des Zeitstempels (Device, Absender oder Dritter) und eigener Schlüssel K_{Z,M} beim Mittler.

Die beschriebenen AusfUhrungsformen dienen dem besseren Verständnis und beabsichtigten nicht, die Erfindung zu beschränken.

## Patentansprüche

1. Verfahren zum sicheren Austausch von digitalen Nachrichten für eine Transaktion zwischen einem oder mehreren Absendern und einem oder mehreren Empfängergeräten, wobei
a) die Nachricht des Absenders über eine dritte Partei, einen sogenannten Mittler gesendet wird, wobei die Nachricht für den Mittler aufgrund einer Verschlüsselung nicht lesbar ist, und
b) wobei sich der Absender gegenüber dem Mittler authentisiert und die Nachricht somit sicher vom Absender stammt und
c)wobei sich der Mittler gegenüber dem Empfängergerät authentisiert und somit der Empfang von unerwünschten Nachrichten vermieden werden kann, und wobei das Betriebssystem des Empfängergeräts gehärtet ist und das Ausführen fremden Codes nicht zulässt und
d) das Empfängergerät die Nachtricht entschlüsselt anzeigt und
c) nach Freigabe durch den Benutzer des Empfängergerätes eine Antwort mit einer Bestätigung versieht und direkt oder über einen Mittler an den Absender sendet, wobei der Absender die Herkunft und Integrität der Antwortnachricht mit Hilfe einer Prüffunktion verifiziert und die Transaktion tatsächlich bestätigt wird.

2. Verfahren nach dem vorangegangenen Anspruch,
wobei das Empfängergerät eine Antwort mit einer Bestätigung versieht und über einen Mittler an den Absender sendet, wobei der Mittler die Herkunft und Integrität der Antwortnachricht mit Hilfe einer Prüffunktion verifiziert und wobei der Mittler vorzugsweise gegenüber dem Absender die Herkunft und Integrität der Antwort bestätigt, und der Absender verifiziert die Bestätigung des Mittlers mit Hilfe einer Prüffunktion.

3. Verfahren nach einem oder mehreren der vorangegangenen Ansprüche, wobei der Absender einer oder mehreren möglichen Antworten Zufallswerte zuordnet und diese zusammen mit den Antwortmöglichkeiten in die verschlüsselt und an das Empfängergerät übertragene Nachricht einbettet,
das Empfängergerät die Nachricht durch Senden des entsprechenden Zufallswertes an den Absender beantworten kann, ohne dass der Mittler oder ein Dritter irgendeine Information über die eigentliche Antwort erhalten kann.

4. Verfahren nach einem oder mehreren der vorangegangenen Ansprüche, wobei der Mittler die Nachricht oder auch Teilaspekte der Nachricht interpretieren bzw. entschlüsseln kann und somit Statistikdaten zu entsprechenden Absendern oder Empfängergeräten generieren kann.

5. Verfahren nach einem oder mehreren der vorangegangenen Ansprüche, wobei die vom Absender versendeten Nachrichten mit einer eindeutigen Nachrichten-ID versehen werden, welche vom Absender oder vom Mittler verwaltet und von der Identität des Absenders und - oder des Empfängergerätes abhängig sein kann, wobei das Empfängergerät anhand ihrer ID die Nachricht nur dann akzeptiert, wenn diese aus Sicht des Empfängergerätes gültig ist,
und wobei die vom Absender versendeten Nachrichten vorzugsweise mit einer ID versehen werden, welche Zeitinformationen enthalten, und somit das Vorhandensein von zwei identischen Nachrichten ausgeschlossen ist.

6. verfahren nach einem oder mehreren der vorangegangenen Ansprüche, wobei die vom Empfängergerät ausgeführten Funktionen in einem tragbaren Gerät implementiert sind, wobei Nachrichten über eine Drahtverbindung, Funksignale oder optisch übertragen werden können und vorzugsweise eine sehr begrenzte Funktionalität aufweisen, diese umfasst die Zusage, die Ablehnung und die Anzeige von Informationen auf einem Display.

7. Verfahren nach einem oder mehreren der vorangegangenen Ansprüche, wobei das Empfängergerät eine Antwort verschlüsselt, und an den Mittler schickt, so dass nur dieser die Antwortnachricht wieder entschlüsseln und an den Absender weiterleiten kann.

8. System zum sicheren Austausch von digitalen Nachrichten für eine Transaktion mit einer Mittlervorrichtung und einem Empfängergerät **gekennzeichnet durch** einen Mittler und eine Empfangsvorrichtung zur Durchführung des Verfahrens nach Anspruch 1 zwischen einem oder mehreren Absendern und einem oder mehreren Empfängergeräten, wobei die Nachricht des Absenders über die Mittlervorrichtung gesendet wird,
wobei die Nachricht für den Mittler aufgrund einer Verschlüsselung nicht lesbar ist und wobei der Mittler Mittel aufweist, so dass sich der Absender gegenüber dem Mittler authentisiert und die Nachricht somit sicher vom Absender stammt und wobei Mittel vorhanden sind, so dass sich der Mittler gegenüber dem Empfängergerät authentisiert und somit der Empfang von unerwünschten Nachrichten vermieden werden kann und wobei das Betriebssystem des Empfängergeräts gehärtet ist und das Ausführen fremden Codes nicht zulässt und das Empfängergerät Mittel aufweist, um die Nachricht zu entschlüsseln und anzuzeigen; und Mittel zur Freigabe **durch** den Benutzer des Empfängergerätes aufweist und eine Antwort erzeugt und mit einer Bestätigung versieht und direkt oder über einen Mittler an den Absender sendet, wobei der Absender die Herkunft und Integrität der Antwortnachricht mit Hilfe einer Prüffunktion verifiziert und die Transaktion tatsachlich bestätigt wird.

9. System nach dem vorhergehenden systemanspruch, wobei das Empfängergerät eine Antwort mit einer Bestätigung versieht und direkt über den Mittler an den Absender sendet, wobei der Absender die Herkunft und Integrität der Antwortnachricht mit Hilfe einer Prüffunktion verifiziert.
und /oder
wobei das Empfängergerät eine Antwort mit einer Bestätigung versieht und über einen Mittler an den Absender sendet, wobei der Mittler die Herkunft und Integrität der Antwortnachricht mit Hilfe einer Prüffunktion verifiziert,
und wobei vorzugsweise der Mittler gegenüber dem Absender die Herkunft und Integrität der Antwort bestätigt, und wobei der Absender die Bestätigung des Mittlers mit Hilfe einer Prüffunktion verifiziert.

10. System nach einem oder mehreren der vorhergehenden Systemansprüche, wobei der Absender einer oder mehreren möglichen Antworten Zufallswerte zuordnet und diese zusammen mit den Antwortmöglichkeiten in die verschlüsselt und an das Empfängergerät übertragene Nachricht einbettet,
das Empfängergerät die Nachricht durch Senden des entsprechenden Zufallswertes an den Absender beantworten kann, ohne dass der Mittler oder ein Dritter irgendeine Information über die eigentliche Antwort erhalten kann.

11. System nach einem oder mehreren der vorhergehenden Systemansprüche, wobei der Mittler die Nachricht oder auch Teilaspekte der Nachricht interpretieren bzw. entschlüsseln kann und somit Statistikdaten zu entsprechenden Absendern oder Empfängergeräten generieren kann.

12. System nach einem oder mehreren der vorhergehenden Systemansprüche, wobei die vom Absender versendeten Nachrichten mit einer eindeutigen Nachrichten-ID versehen werden, die vom Mittler verwaltet und von der Identität des Absenders und - oder des Empfängergerätes abhängig sein kann, wobei das Empfängergerät anhand ihrer ID die Nachricht nur dann akzeptiert, wenn diese aus Sicht des Empfängergerätes gültig ist, und wobei vorzugsweise die vom Absender versendeten Nachrichten mit einer ID versehen werden, welche Zeitinformationen enthalten, und somit das Vorhandensein von zwei identischen Nachrichten ausgeschlossen ist.

13. System nach einem oder mehreren der vorhergehenden Systemansprüche, wobei das Empfängergerät eine Antwort verschlüsselt, und an den Mittler schickt, so dass nur dieser die Antwortnachricht wieder entschlüsseln und an den Absender weiterleiten kann.

## Claims

1. A method for secure exchange of digital information for a transaction between one or more senders and one or more receiver devices, wherein
a) the sender's message is sent through a third party, called a mediator, wherein the message as a result of encryption is not readable for the mediator, and
b) wherein the sender authenticates against the mediator and the message of the sender thus is safe and
c) wherein the mediator authenticates against the receiver device and thus the reception of undesirable messages can be prevented, and wherein the operating system of the receiver device is hardened and does not allow running other/foreign codes and
d) the receiving device displays the message decrypted and
c) after approval by the user the receiver device provides the responses with a confirmation and sends it directly or through an mediator to the sender, wherein the sender verifies the origin and integrity of the response message using a test function and the transaction is actually confirmed.

2. Method according to the preceding claim,
wherein the receiver device provides an response with a confirmation and sends it through a mediator to the sender, the mediator verifies the origin and integrity of the response message by a test function and wherein the mediator preferably confirms the origin and integrity of the response to the sender, and the sender verifies the confirmation of the mediator by a test function.

3. Method according to one or more of the preceding claims, wherein the sender assigns random values to one or more possible responses and encrypts them and embeds them together with the possible response being transmitted to the receiver device,
the receiver device can response to the response by sending the corresponding random value to the sender avoiding that the mediator or any third party may obtain any information about the actual response.

4. The method according to one or more of the preceding claims, wherein the mediator may interpret or decode the response or aspects of the response and thus can generate statistics about corresponding sender or receiver devices.

5. The method according to one or more of the preceding claims, wherein the messages sent by the sender are provided with a unique message ID, administered by the sender or by the mediator and can be dependent on the sender's identity or the receiver device, wherein the receiver device only accepts the message based on its ID, if it is valid from the perspective of the receiver device,
and wherein the messages sent by the sender are preferably provided with an ID containing time information, and thus the presence of two identical messages is excluded.

6. The method according to one or more of the preceding claims, wherein the functions performed by the receiver device are implemented in a portable device, wherein messages can be transferred via a wire connection, radio signals, or optical signals and preferably have a very limited functionality, comprising a confirmation, the rejection and displaying information on a display.

7. The method according to one or more of the preceding claims, wherein the receiver device encrypts a response and sends it to the mediator, so that only the mediator can decrypt the response message again and transmit it to the sender.

8. A system for the secure exchange of digital information for a transaction with an mediator device and a receiver device **characterized by** a mediator and a receiver device for performing the method of claim 1 between one or more senders and one or more receiver devices,
wherein the sender's message is sent via the mediator device,
for the mediator the message as a result of encryption is not readable and
wherein the mediator comprises means so that the sender authenticates against the mediator and the message thus is safe from the sender and wherein means are provided so that the mediator authenticates against the receiver device and thus the reception of unwanted messages can be avoided and
wherein the operating system of the receiver device is hardened and does not allow running other codes and the receiver device comprising means to decrypt and display the message; and
comprising means for releasing by the user the receiver device and generating a response and providing it with a confirmation and sending it directly or through an mediator to the sender, the sender verifies the origin and integrity of the response message using a test function and the transaction is actually confirmed.

9. The system according to the previous system claim, wherein the receiver device provides a confirmation to a response message and directly sends it from the transmitter to the sender, wherein the sender verifies the origin and integrity of the response message using a test function.
and / or
wherein the receiver device provides a response message with a confirmation and sends it through an mediator to the sender, the mediator verifies the origin and integrity of the response message using a test function
and wherein preferably the mediator confirms the origin and integrity of the response to the sender, and wherein the sender verifies the confirmation of the mediator using a test function.

10. System according to one or more of the preceding system claims, wherein the sender assigns random values to one or more possible response messages and transmits them encrypted together with the possible responses message by embedding to the receiver,
the receiver device can respond to the message by sending the corresponding random value to the sender, avoiding that the mediator or a third party may obtain any information about the actual response.

11. System according to one or more of the preceding system claims, wherein the mediator is able to interpret and decode the message or some aspects of the message, and thus can generate statistics corresponding to the sender or receiver device.

12. The system according to one or more of the preceding system claims, wherein the messages sent by the sender are provided with an unique message ID, managed by the mediator and depending on the identity of the sender and or the receiver device, said receiver device only accepts the message based on their ID if it is valid from the perspective of the receiver device, and wherein preferably the sent messages from the sender is provided with an ID containing time information, and therefore the presence of two identical message is excluded.

13. The system according to one or more of the preceding system claims, wherein the receiver device encrypts n response, and sends it to the mediator, so only the mediator can decrypt the response message and forward it to the sender.

## Revendications

1. Un procédé pour un échange sécurisé d'informations numériques pour une transaction entre un ou plusieurs dispositif(s) émetteur(s) et un ou plusieurs dispositif(s) destinataire(s), dans lequel
a) le message de l'expéditeur est transmis à une tierce partie, à savoir un médiateur, dans lequel le message est transmis sous forme chiffrée non lisible par le médiateur, et
b) dans lequel l'expéditeur s'authentifie auprès du médiateur, rendant ainsi authentique le message de l'expéditeur et
c) dans lequel le médiateur s'authentifie auprès du dispositif destinataire de façon à éviter, ainsi, la réception de message indésirables, et dans lequel le système d'exploitation du destinataire est durci et ne permet pas l'exécution de programmes autres ou étrangers et
d) le dispositif récepteur affiche le message déchiffré et
e) à la suite de l'approbation par l'utilisateur le dispositif destinataire fournit les réponses avec confirmation et la transmet à l'expéditeur, directement ou via un médiateur, dans lequel l'expéditeur vérifie l'origine et l'intégrité du message de réponse au moyen d'une fonction de test et la transaction peut être réellement confirmée.

2. Le procédé selon la revendication précédente, dans lequel le dispositif destinataire fournit une réponse avec confirmation et la transmet à l'expéditeur via un médiateur, le médiateur vérifiant l'origine et l'intégrité du message de réponse au moyen d'une fonction de test et dans lequel le médiateur confirme de préférence à l'expéditeur l'origine et l'intégrité de la réponse, et l'expéditeur vérifie la confirmation du médiateur au moyen d'une fonction de test.

3. Le procédé selon l'une ou plusieurs des revendications précédentes, dans lequel l'expéditeur affecte des valeurs aléatoires à une ou plusieurs réponses éventuelles et les chiffre et les incorpore ensemble avec la réponse éventuelle devant être transmise au dispositif destinataire,
le dispositif destinataire pouvant répondre à la réponse au moyen de l'émission d'une valeur aléatoire correspondante à l'expéditeur en évitant que le médiateur ou tout tierce partie puisse obtenir une quelconque information concerne la réponse effective.

4. Le procédé selon l'une ou plusieurs des revendications précédentes, dans lequel le médiateur peut interpréter ou décoder la réponse ou des aspects de la réponse et peut ainsi générer des statistiques concernant les dispositifs expéditeurs ou destinataires concernés.

5. Le procédé selon une ou plusieurs des revendications précédentes, dans lequel les messages transmis par l'expéditeur sont fournis avec un unique identifiant de message ID, administré par l'expéditeur ou par le médiateur et peuvent être dépendant de l'identité du dispositif expéditeur ou du dispositif destinataire, dans lequel le dispositif destinataire n'accepte que le message basé sur cet identifiant ID, lorsque considéré valide pour le dispositif destinataire, et dans lequel les messages transmis par l'expéditeur sont fournis de préférence avec un ID comportant une information temporelle, de façon à exclure la présence de deux messages identiques.

6. Le procédé selon une ou plusieurs des revendications précédentes, dans lequel les fonctions réalisées par le dispositif destinataire sont implémentées dans un dispositif portable, dans lequel les messages peuvent être transférés via une connexion câblée, via des signaux radios ou des signaux optiques et comporte de préférence une fonction très limitées, comprenant une confirmation, le rejet et l'affichage d'une information sur un afficheur.

7. Le procédé selon une ou plusieurs des revendications précédentes, dans lequel le dispositif destinataire chiffre une réponse et la transmet au médiateur, de telle manière que seul le médiateur peut à nouveau déchiffrer le message de réponse et le transmettre à l'expéditeur.

8. Un système pour un échange sécurisé d'informations numériques pour une transaction avec un dispositif médiateur et un dispositif destinataire **caractérisé par** un médiateur et un dispositif destinataire pour la mise en oeuvre du procédé de la revendication 1 entre un ou plusieurs dispositif(s) émetteur(s) et un ou plusieurs dispositif(s) destinataire(s),
dans lequel le message de l'expéditeur est transmis via le dispositif médiateur,
pour le médiateur le message est le résultat d'un chiffrage non lisible et dans lequel le médiateur comporte des moyens de telle manière que l'expéditeur s'authentifie auprès du médiateur pour que le message soit ainsi authentique de la part de l'expéditeur et dans lequel des moyens sont fournis pour que le médiateur s'authentifie auprès du dispositif destinataire de façon à éviter ainsi la réception de messages indésirables et
dans lequel le système d'exploitation du dispositif destinataire est durçi et ne permet pas l'exécution d'autres programmes et le dispositif destinataire comporte des moyens pour déchiffrer et afficher le message ; et
comprenant des moyens pour libérer le dispositif expéditeur par l'utilisateur et pour générer une réponse et la fournir avec une confirmation et la transmettre directement ou via un médiateur à l'expéditeur, l'expéditeur vérifiant l'origine et l'intégrité du message de réponse au moyen d'une fonction de test de façon à permettre la confirmation de la transaction.

9. Le système selon la revendication précédente, dans lequel le dispositif destinataire fournit une confirmation au message de réponse et le transmet directement depuis l'émetteur jusqu'à l'expéditeur, le médiateur vérifiant l'origine et l'intégrité du message de réponse au moyen d'une fonction de test
et dans lequel, de préférence, le médiateur confirme à l'expéditeur l'origine et l'intégrité de la réponse, et dans lequel l'expéditeur vérifie la confirmation du médiateur au moyen d'une fonction de test.

10. Le système selon l'une ou plusieurs des revendications de système précédentes, dans lequel l'expéditeur affecte des valeurs aléatoire à un ou plusieurs messages de réponse éventuels et les transmet de manière chiffrée avec le message de réponse incorporé dans le destinataire, le dispositif destinataire pouvant répondre au message au moyen de la transmission de la valeur aléatoire correspondante à l'expéditeur, en évitant que le médiateur ou toute tierce partie ne puisse obtenir une quelconque information concernant la réponse effective.

11. Le système selon une ou plusieurs des revendications de système précédentes, dans lequel le médiateur est capable d'interpréter et de décoder le message ou des aspects du message, et de générer ainsi des statistiques correspondant au dispositif expéditeur ou destinataire.

12. Le système selon une ou plusieurs des revendications de système précédentes, dans lequel les messages transmis par l'expéditeur sont fournis avec un unique identifiant de message ID, administré par le médiateur et peuvent être dépendant de l'identité du dispositif expéditeur ou du dispositif destinataire, dans lequel le dispositif destinataire n'accepte que le message basé sur cet identifiant ID, lorsque considéré valide pour le dispositif destinataire, et dans lequel les messages transmis par l'expéditeur sont fournis de préférence avec un ID comportant une information temporelle, de façon à exclure la présence de deux messages identiques.

13. Le système selon une ou plusieurs des revendications de système précédentes, dans lequel le dispositif destinataire chiffre une réponse, et la transmet au médiateur, de telle façon que le médiateur peut déchiffrer le message de réponse et le faire suivre à l'expéditeur.
